# EUROPEAN PATENT APPLICATION

(11) **EP 0 906 931 A2**
(43) Date of publication of application: **07.04.1999**
(21) Application number: 98203159.3
(22) Date of filing: 21.09.1998
(51) Int. Cl.: C08J 3/14, G03G 9/08

(54) **Solvent removal from suspended polymer solution droplets**

(30) Priority: 03.10.1997 US 943920
(71) Applicant: EASTMAN KODAK COMPANY, Rochester, New York 14650 (US)
(72) Inventor: Smith, Dennis Edward, Eastman Kodak Company, Rochester, New York 14650-2201 (US); Clair, Russell Samuel, Eastman Kodak Company, Rochester, New York 14650-2201 (US); Ezenyilimba, Matthew Chigozie, Eastman Kodak Comp., Rochester, New York 14650-2201 (US); Reber, James Fredrick, Eastman Kodak Company, Rochester, New York 14650-2201 (US)
(74) Representative: Parent, Yves

(57) **Abstract**

The present invention is a method of making polymeric particles having a predetermined and controlled size and size distribution. The method includes the steps of dissolving a polymer in a solvent, and forming a suspension of small droplets of solvent having dissolved polymer in water containing a water-insoluble particulate stabilizer having a size of less than 100 nm. The suspension is vacuum boiled at a pressure of less than 500 mm Hg to remove the solvent from the droplets.

## Description

### FIELD OF THE INVENTION

This invention relates to methods of preparing powders suitable as electrographic toner and carrier particles. More particularly, this invention relates to an improved method of preparing toner and/or carrier particles having controlled morphology and narrow particle size distribution, and other polymeric powders with improved flow and handling properties.

### BACKGROUND OF THE INVENTION

Particles useful as toner and/or carrier are prepared by numerous methods, probably the most primitive of which is grinding bulk polymer materials to a suitable particle size and/or particle size distribution. The disadvantages of this process are widely known. Initially, the particles are irregularly shaped after grinding and may not be suitable for their intended purpose. Secondly, some polymeric materials are not amenable to grinding due to their physical properties. Thirdly, the particle size distribution produced by grinding is broad.

In typical copying processes, toner and/or carrier particles are subject to electrostatic and other forces that affect the particles differently depending on their size. Therefore, in order to obtain high quality copies, it is preferred that toner particles have a controlled morphology and narrow size distribution. Past methods of attaining particles of the desired size and size distribution include sizing the toner particles by sieving or air classification. However, these methods result in significant product loss when used to obtain narrow particle size distributions. Recently, to avoid this expensive and time consuming process, new methods have been developed to produce particles having a narrow size distribution and controlled morphology.

One such method, referred to as "evaporation limited coalescence" is described in United States Patent No. 4,833,060 to Nair, et al. ("Nair"), incorporated herein by reference. The limited coalescence technique described in Nair involves first forming a solution of a polymer in a solvent that is immiscible with water (along with any required addenda), and then suspending the polymer-solvent solution in water containing a promoter and a colliodal suspension stabilizer. The resulting suspension is subjected to high shear action to reduce the size of the polymer-solvent droplets. The shearing action is removed and the polymer-solvent droplets, with particles of stabilizer at their surface, coalesce to the extent allowed by the stabilizer to form coalesced polymer-solvent droplets. After the drop size has been determined by the limited coalescence, the solvent must be removed from the coalesced drops to form the solidified polymer particles which are then isolated from the suspension by filtration or other suitable means.

The Nair limited coalescence process has disadvantages, despite its ability to produce polymeric particles with controlled morphology and narrow size distribution. One key disadvantage is that the solvent is typically removed by evaporation and recovery of the solvent is difficult. Evaporation of the solvent or dispersant, is a slow, time consuming process. In addition, many potential limited coalescence systems are not sufficiently robust to withstand the stirring and heating that is required to complete the evaporation process and solidify the coalesced droplets. The agitation and heat destabilize the coalesced droplets before they are solidified, causing breakdown of the stabilized interface and agglomeration of the particles. Therefore, there continues to be a need for improved limited coalescence processes.

Removal of the solvent during Evaporation Limited Coalescence (ELC) has been described in the prior art.

U.S. 5,541,024, col. 6, lines 50 to 64 mentions the use of subatmospheric pressures from 10 to 25 mm mercury. In example 12, for instance, the bulk of the ethyl acetate is removed at atmospheric pressure under nitrogen sweep for 17 hours, followed by stirring under a vacuum of 20 mm Hg for 3 hours. This patent teaches use of subatmospheric strip to remove the last traces of solvent and not the bulk of the solvent.

U.S. 5,342,724 in col. 13, lines 26 to 31 mentions heating the entire system to vaporize solvent but has no mention of specific temperatures or use of subatmospheric pressure.

EP 0 725 317 A1 describes a solvent evaporation method to make toner particles. At page 8, lines 28 to 29 it teaches the solvent is evaporated, preferably under reduced pressure and fairly low temperature. In Example 1, page 11, lines 26 to 29, ethyl acetate is evaporated at 50 °C under reduced pressure (about 50 kPa, 373 mm Hg) while blowing air over the emulsion to take away the solvent vapor. This patent application does not use a water-insoluble particulate stabilizer and says use of silica, a particulate stabilizer, is a problem.

Although various evaporation techniques to remove the solvents such as leaving in an open container overnight, nitrogen bubbling and falling film evaporators are mentioned, none teach the process of the present invention. In all of these techniques, the evaporated solvent is diluted by large amounts of carrier gas and therefore difficult to recover.

There exists a need for an improved method for removing solvents from ELC droplets. The present invention describes a method for the removal of solvent from ELC droplets which results in quicker solvent removal, easier solvent recovery and narrower particle size distribution.

### SUMMARY OF THE INVENTION

The present invention is a method of making polymeric particles having a predetermined and controlled size and size distribution. The method includes the steps of dissolving a polymer in a solvent, and forming a suspension of small droplets of solvent having dissolved polymer in water containing a water-insoluble particulate stabilizer having a size of less than 100 nm. The suspension is vacuum boiled at a pressure of less than 500 mm Hg to remove the solvent from the droplets.

### DETAILED DESCRIPTION OF THE INVENTION

We have found that removing the solvent from Evaporative Limited Coalescence (ELC) droplets by boiling under vacuum at less than 500 mm Hg and 35 to 75°C. is an improvement over prior art evaporation techniques. The advantages include quicker solvent removal, easier solvent recovery, viability with less volatile solvents, and narrower size distribution of the polymer particles.

In accordance with the present invention, a method of making particles having a controlled morphology and/or narrow size distribution is disclosed. The process of this invention is useful in preparing a variety of particles having a narrow size distribution. These particles are useful for making electrographic toners and carriers, ceramic powders, matte materials, bead spread layers, drug loaded beads, ion exchange resins, and other materials that require small particles of narrow size distribution and/or controlled morphology. The present method will be described below in detail relative to particles formed for use as electrographic toner and/or carrier.

The solid materials that compose the particles to be formed are first dispersed and/or dissolved in a dispersant which is immiscible with the suspending liquid to be used. For toners, various toner addenda (e.g., colorant, charge control agent) can be added to the toner polymer either before or during this dispersion step.

The method of the present invention is applicable to producing particles with a controlled morphology and narrow size distribution from any material that is capable of being dissolved in or uniformly dispersed in a dispersant. The present method is particularly useful to form toner particles from polymers capable of dissolution in water-immiscible solvents (i.e., dispersants). Exemplary hydrophobic polymers include olefin homopolymers and copolymers, such as polyethylene, polypropylene, polyisobutylene, and polyisopentylene; polyfluoroolefins, such as polytetraflouroethylene and polytrifluorochloroethylene; polyamides, such as polyhexamethylene adipamide, polyhexamethylene sebacamide, and polycaprolactam; acrylic resins, such as polymethylmethacrylate, polymethylacrylate, polyethylmethacrylate, and styrene-methylemethacrylate; ethylene-methyl acrylate copolymers, ethylene-ethyl acrylate copolymers, ethylene-ethyl acrylate copolymers, ethylene-ethyl methacrylate copolymers, polystyrene and copolymers of styrene thereof with unsaturated monomers mentioned above, cellulose derivatives, such as cellulose acetate, cellulose acetate butyrate, cellulose propionate, cellulose acetate propionate, and ethyl cellulose; polyesters, such as polycarbonates; polyvinyl resins, such as polyvinyl chloride, copolymers of vinyl chloride and vinyl acetate, and polyvinyl butyral, polyvinyl acetal, ethylene-vinyl acetate copolymers, ethylene-vinyl alcohol copolymers, and ethylene-allyl copolymers, such as ethylene-allyl alcohol copolymers, ethylene-allyl acetate copolymers, ethylene-allyl acetone copolymers, ethylene-allyl benzene copolymers ethylene-allyl ether copolymers, and ethylene-acrylic copolymers; and polyoxymethylene, polycondensation polymers, such as polyesters, polyurethanes, polyamides, polycarbonates and the like. For toner polymer particles it is preferable the polymer particles have a Tg less than 80 °C.

The quantity of dispersant is important in that as the amount of dispersant is increased, the resultant size of the particles prepared under any given conditions will decrease. Generally, higher concentrations of solids in the dispersant produce larger particle size powder particles having a lower degree of shrinkage than those produced by lower concentrations of solids in the same dispersant. The concentration of the solid materials in the dispersant should be from about 1 to about 80 and preferably from about 2 to about 65 weight percent. When preparing electrographic toner particles, the concentration of polymer in dispersant is generally maintained at about 10 to about 35 weight percent ("wt%") for a resin having a number average molecular weight of 10,000 and a weight average molecular weight of 200,000.

Any suitable solvent that will dissolve the polymer and which is also immiscible with water may be used as the dispersant in the practice of this invention such as for example, chloromethane, dichloromethane, ethyl acetate, n-propyl acetate, iso-propyl acetate, vinyl chloride, methyl ethyl ketone (MEK), trichloromethane, carbon tetrachloride, ethylene chloride, trichloroethane, toluene, xylene, cyclohexanone, 2-nitropropane and the like. Preferred are n-propyl acetate, iso-propyl acetate, ethyl acetate and methylene chloride. Particularly preferred is n-propyl acetate.

The dispersion of polymer in the solvent (the "dispersion phase" of the system) is introduced into water which is substantially immiscible with the solvent and contains a water-insoluble stabilizer. The weight ratio of dispersion phase to suspending liquid (the "continuous phase" of the system) must be sufficiently small to cause the dispersion phase to form a discontinuous phase within a continuous suspending phase upon shear mixing. However, the weight ratio should be maintained at a high level so that the specific process capacity (the unit weight of particles produced per unit volume of process equipment) is optimized. Another objective of maintaining a high weight ratio of dispersion phase is to increase the collision rate of very small droplets produced by shearing relative to larger droplets so that a narrow size distribution may be obtained. A weight ratio of dispersant to suspending liquid is in the range from about 0.1 to about 0.5, preferably from about 0.25 to about 0.4.

The stabilizer serves to surround the dispersion phase droplets during the subsequent shear mixing of the dispersion phase and the suspending phase, i.e. water. The stabilizer limits the coalescence the dispersion phase droplets can undergo upon removal of the shearing force. To achieve this effect, it is generally desired to control the pH of the system to regulate the charge and hydrophilicity of ionizable stabilizers. The pH should be maintained at about the pkₐ to pkₐ + 5, preferably pkₐ +1 to pkₐ +4, for colloids with an acid group. Likewise, the pH should be maintained at 14 - pk_{b} to 9 - pk_{b}, preferably 13 - pk_{b} to 10 - pk_{b} for colliods having basic groups. Amphoteric colliods may be used in a pH range of 5 pH units either side of the stabilizer's isoelectric point, preferably 1 to 4 pH units from the isoelectric point. For silica, the isoelectric point is about 2 and the pH is generally maintained between at a value of from about 2 to about 7, preferably from about 3 to 6 and most preferably 4. pkₐ is a value representing the extent of dissociation of a stabilizer's acid group and is defined by the base 10 logarithm of the inverse of the equilibrium constant of the acid dissociation. Likewise, pk_{b} is a value representing the extent of dissociation of a stabilizer's base group and is defined by the base 10 logarithm of the inverse of the equilibrium constant of the base dissociation. The isoelectric point is the pH value where all the charges on the stabilizer added together are net neutral.

Suitable concentrations of stabilizer are, generally, from about 1.0 to 70 g per 100 g of solids in the dispersion phase, preferably from about 2 to 35 g per 100 g of solids for silica stabilizers. Latex stabilizers are generally used in concentrations from about 0.1 to 10 g per 100 g of solids in the dispersion phase, preferably from about 0.5 to 5.0 g per 100 g of solids in the dispersion phase. Microgel stabilizers are generally used in concentrations from about 0.5 to 50 g per 100 g of solids in the dispersion phase, preferably 1.0 to 25 g per 100 g of solids in the dispersion phase. Further details regarding the use of stabilizers in limited coalescence processes can be found in United States Patent Nos. 4,965,131 to Nair, et al., 4,833,060 to Nair, et al., and 4,758,492 to Nair, the disclosures of which are hereby incorporated by reference. The size of the coalesced droplets ultimately formed depends on the amount of the stabilizer employed. As the quantity of stabilizer added to the system increases, the size of the coalesced droplets will generally decrease.

The water-insoluble particlulate stabilizer generally should have dimensions such that they are from about 1 to about 100 nm preferably from about 5 to 80 nanometers and most preferably from about 20-70 nanometers. The size and concentration of the stabilizer controls and predetermines the size of the final polymer particle.

Such stabilizers can be inorganic materials such as insoluble metal salts or oxides or clays or can be organic materials such as starches, sulfonated crosslinked homopolymers and resinous polymers, as described in US Patent No. 2,932,629, incorporated herein by reference. Silica, as described in US Patent No. 4,833,060, incorporated herein by reference, and copolymers such as copoly(styrene-2-hydroxyethyl methacrylate-methacrylic acid-ethylene glycol dimethacrylate), as described in US Patent No. 4,965,131, incorporated by reference herein, are examples of particlularly desirable particulate suspension stabilizers that can be used in the practice of this invention. Particularly useful silica particulate stabilizers are sold by DuPont under the name LUDOX or Nalco Chemical under the NALCOAG.

Optionally, depending on the stabilizer used, a promoter can also be added to the continuous phase. Any suitable promoter that is water soluble and affects the hydrophilic/hydrophobic balance of the solid dispersing agent in the aqueous solution may be employed in order to drive the solid dispersing agent to the polymer/solvent droplet-water interface, such as, for example, sulfonate polystyrenes, alginates, carboxymethyl cellulose, tetramethyl ammonium hydroxide or chloride, diethylaminoethylmethacrylate, water-soluble complex resinous amine condensation products such as the water soluble condensation products of diethanol amine and adipic acid, a particularly suitable one of this type is poly(adipic acid-co-methylaminoethanol), water-soluble condensation products of ethylene oxide, urea and formaldehyde and polyethyleneimine. Also effective as promoters are gelatin, glue, casein, albumin, gluten and the like. Nonionic materials such as methoxy cellulose may be used.

The dispersion phase is mixed with the water phase followed by high shearing. During this shearing step, the dispersion phase droplets are dispersed and reduced in size in the suspending liquid in a high shear agitation zone and, upon exiting this zone, a suspension of small dispersion phase droplets in the suspending liquid is formed. The shearing conditions must be great enough to break the dispersion phase into droplets substantially smaller than the droplets formed after limited coalescence has occurred. Additionally, the temperature must be maintained sufficiently low to prevent heating and local cavitation in the shear zone. Each of the small dispersion phase droplets are surrounded by stabilizer particles smaller than 100 nm, which limit and control both the size and size distribution of the small, dispersion phase droplets as they coalesce. Preferably, the small droplets are allowed to coalesce to a larger size at which substantially no further coalescence can occur, as controlled by the stabilizer particles present on the surface of the small droplets. While any high shear type agitation device is applicable to the process of this invention, it is preferred that the dispersion phase be introduced into the suspending liquid using a high pressure homogenizer, i.e. a microfluidizer such as Model No. 110F (sold by Microfluidics Manufacturing, 90 Oak Street, Newton, Massachusetts 02164).

After the droplets of dispersion phase have been subjected to the high shear agitation, the dispersant or solvent must be removed from the coalesced droplets. In accordance with the present invention, the suspension is subjected to a pressure of less than 500 mm Hg to cause boiling of the dispersant or solvent.

The rate of solvent removal is determined by the temperature, pressure and heat input rate to the system. With too high a temperature coagulation of polymer particles which melt or soften at temperatures around 55°C to 70°C (such as toner particles) occurs. At temperatures below 35°C the solvent is more difficult to recover by condensation and the vacuum levels required to boil the solvent are not practical for large scale manufacture. The vacuum levels for boiling are dictated by the temperature and solvent.

Boiling of binary aqueous/organic solvent systems is well known and can proceed ideally or as an azeotrope. Ethyl acetate and n-propyl acetate form azeotropes with water, see Azeotropic Data-III, Advances in Chemistry Series 116, American Chemical Society, 1973. The azeotrope in these cases results in removal of the solvent at temperatures lower than the boiling point of either water or the solvent, and more solvent than water preferentially boils off. In the present invention, the vacuum boiling of the solvent/water does not proceed as predicted for aqueous/solvent azeotropic systems. Instead, the polymer particles have an affinity for the solvent which raises the boiling point.

Any suitable piece of equipment can be used to perform the vacuum boiling as long as the pressure and temperature conditions are established so that boiling rather than evaporation of the solvent occurs. Such equipment includes stirred vessels, wiped film evaporators, falling film evaporators, rising film evaporators, thin film evaporators, heat exchangers and the like. Stirred vessels are preferred.

Recovery of the solvent using prior art evaporation methods is very difficult because the solvent is at low concentration in the carrier gas. When using vacuum boiling of the present invention, however, it is easily recovered by simple condensation. Use of a carrier gas stream to remove solvent vapors is possible, but not preferred since that makes solvent recovery more difficult.

The droplets may contain additional addenda such as magnetic particles, coloring agents., charge control agents, lubricants and waxes.

The amount of dispersant removed is dependent on the subsequent isolation steps. For example, if the solidified particles are isolated from the suspension by filtration, a higher degree of solidification will be required to increase the "robustness" of the coalesced droplets (i.e., resistance to agglomeration or coalescence past the limit as controlled by the stabilizer) due to the mechanical stress of filtration. On the other hand, if the solidified particles are separated by sedimentation, the particles need not be as thoroughly solidified.

The ELC process has been thoroughly described. The present invention is applicable both to latex LC where an organic particulate suspending agent is used and silica LC where an inorganic particulate suspending agent is used.

In prior art evaporation the solvent diffuses from the surface of the liquid to the carrier air or nitrogen stream. The solvent diffuses out of the droplets and into the continuous aqueous phase followed by diffusion from the aqueous phase. Diffusions such as this are inherently slow and time consuming. When removing the solvent as per our invention, there is a visible boiling action, so that the solvent is being directly converted from liquid to gas.

Boiling is distinctly different from evaporation. See *General Chemistry*, K.W. Whitten, K.D. Gailey, 2nd Ed. pp302-305, 1984, incorporated herein by reference. The boiling point of a liquid under a given pressure is the temperature at which its vapor pressure is just equal to the applied pressure. When a liquid is heated to the boiling point, bubbles of vapor begin to form below the surface. They rise to the surface and burst releasing the vapor into the gas phase above the liquid. Evaporation, on the other hand, is when molecules diffuse away from the surface of the liquid.

### Examples

A media milled dispersion of Bridged Aluminum Phthalocyanine (BrAlPC) cyan pigment is prepared from a mixture of 65.0 g of the BrAlPc cyan pigment, 6.4 g of commercially available polyester polymer (Kao M binder) in 477.8 g of ethylacetate (13.0% solid).

### Example 1 (Comparison)

To a 500 ml jar equipped with a magnetic stir bar is added 173.9 g of ethyl acetate, 29.6 g of a media milled dispersion of BrAlPc cyan described above, 46.2 g of polyester Kao P binder and 0.50 g of Bontron E88. The above mixture is stirred for 17h on a stir plate. The aqueous phase is made of pH4 buffer consisting of 750.0 ml of distilled water, 15.0 ml of Nalcoag 1060 (60 nm colloidal silica), 4.54 ml of 10% poly(adipic acid-co-methylaminoethanol) and hydrochloric acid to attain pH4.

The organic phase is poured into the stirred aqueous phase and stirring is continued for about 60-90 seconds. The coarse dispersion is passed through the Microfluidizer at 40 psi and into a 2-liter, 3-neck round bottomed flask equipped with a paddle stirrer. The suspension is stirred at 125 RPM for 17h under a nitrogen sweep. A vacuum is attached and the dispersion stirred under vacuum for 2 hours. The vacuum is removed and the dispersion filtered through a coarse screen and collected on a fine fritted funnel, washed 3 times with distilled water. The toner is slurried in 0.1 N KOH solution for 4h, followed by another 1h slurry in 0.1N KOH. The toner is collected and washed with distilled water until water conductivity of ≤10µS/cm is attained. The material is dried in a convection air oven at 42°C. for 17h. Size is 7 µm and coarseness index 1.41.

### Example 2 (Invention)

To a 500.0 ml jar equipped with a magnetic stir bar is charged with 173.9 g of ethylacetate, 29.6 g of a media milled dispersion of BrAlPc cyan, 56.2 g of polyester Kao P binder and 0.50 g of Bontron E88. The above mixture is stirred for 17 hours on a stir plate. The aqueous phase is made up of pH4 buffer consisting of 750.0 ml of distilled water, 15.0 ml of Nalcoag 1060, 4.54 ml of 10% poly(adipic acid-co-methylaminoethanol) and hydrochloric acid to attain pH4.

The organic phase is poured into the stirred aqueous phase and stirring is continued for about 60-90 seconds. The coarse dispersion is passed through the Microfluidizer at 40 psi and into a 2-liter, 3-neck round bottomed flask equipped with a paddle stirrer. The suspension is stirred at 150 RPM under vacuum in a 55°C water bath for 30 minutes to strip the solvent. The vacuum is removed and the dispersion filtered through a coarse screen and collected on a fine fritted funnel, washed 3X with distilled water. The toner is slurried in 0.1 N KOH solution for 4 h, followed by another 1h slurry in 0.1 N KOH. The toner is collected and washed with distilled water until water conductivity of ≤10µS/cm is attained. The material is dried in a convection air oven at 42°C. for 17h. Size is 7.0 µm and coarseness index is 1.20.

### Example 3 (Invention)

To a 500.0 ml jar equipped with a magnetic stir bar is charged with 173.9 g of n-propylacetate, 29.6 g of a media milled dispersion of BrAlPc cyan, 46.2 g of polyester Kao P binder and 0.50 g of Bontron E88. The above mixture is stirred for 17h on a stir plate. The aqueous phase is made up of pH4 buffer consisting of 750.0 ml of distilled water, 14.5 ml of Nalcoag 1060, 4.4 ml of 10% poly(adipic acid-co-methylaminoethanol) and hydrochloric acid to attain pH4.

The organic phase is poured into the stirred aqueous phase and stirring is continued for about 60-90 seconds. The coarse dispersion is passed through the Microfluidizer at 40 psi and into a 2-liter, 3-neck round bottomed flask equipped with a paddle stirrer. The suspension is stirred at 150 RPM under vacuum in a 55°C. water bath for 30 minutes to strip the solvent. The vacuum is removed and the dispersion filtered through a coarse screen and collected on a fine fritted funnel, washed 3X with distilled water. The toner is slurried in 0.1N KOH solution for 4h, followed by another 1h slurry in 0.1N KOH. The toner is collected and washed with distilled water until water conductivity of ≤10µS/cm was attained. The material is dried in a convection air oven at 42°C. for 17h. Size is 6.3 µm and coarseness index 1.20.

### Example 4 (Comparison)

To a 500.0 ml jar equipped with a magnetic stir bar is charged with 173.9 g of n-propylacetate, 29.6 g of a media milled dispersion of BrAlPc cyan, 46.2 g of polyester Kao P binder and 0.50 g of Bontron E88. The above mixture is stirred for 17h on a stir plate. The aqueous phase is made up of pH4 buffer consisting of 750.0 ml of distilled water, 14.5 ml of Nalcoag 1060, 4.4 ml of 10% poly(adipic acid-co-methylaminoethanol) and hydrochloric acid to attain pH4.

The organic phase is poured into the stirred aqueous phase and stirring is continued for about 60-90 seconds. The coarse dispersion is passed through the Microfluidizer at 40 psi and into a 2-liter, 3-neck round bottomed flask equipped with a paddle stirrer. The suspension is stirred at 150 RPM for 17h under a nitrogen sweep and the dispersion filtered through a coarse screen and collected on a fine fritted funnel. The particles agglomerate on the funnel..

| Example Number | Mean Volume Size | Coarseness Index* |
|---|---|---|
| 1 (Comparison) | 7.0 µm | 1.41 |
| 2 (Invention) | 7.0 µm | 1.20 |
| 3 (Invention) | 6.3 µm | 1.20 |
| 4 (Comparison) | agglomerated | |

| | | |
|---|---|---|
| * Coarseness Index is the volume size for which 84% of the particles are smaller divided by the mean volume size for which 50% of the particles are smaller. Smaller values of the coarseness index represent narrower size distribution of the particles. | | |

Examples 2 and 3 both have unexpectedly narrow particle size distribution as indicated by the coarseness index. Example 1 uses evaporation assisted by a nitrogen sweep and surprisingly has a broader size distribution. Example 4 uses a less volatile solvent and unexpectedly agglomerates upon filtration while Example 3 does not.

### Example 5 (Invention)

To a12-liter flask, 5.04 kg n-propyl acetate and 1.26 kg Piccotoner 1221 binder are combined and stirred for 16 hours. The aqueous phase is made up of 18.9 kg distilled water, 126 g phthalic acid, 192 g 10% poly(adipic acid-co-methylaminoethanol), and 630 ml Nalcoag 1060.

The organic phase is poured into the stirred aqueous phase and stirring is continued for about 5 minutes. The coarse dispersion is passed through a homogenizer at 5000-6000 psi and into a 10 gallon reactor. The suspension is stirred at 40 RPM and vacuum is applied, maintaining an absolute pressure of 315 mm Hg. The reactor jacket temperature is heated to 72°C., and the suspension is heated to 60°C., whereupon boiling begins. The solvent is removed over 90 minutes by boiling over the temperature range of 60 to 72°C., and the reactor jacket temperature is ramped up from 72°C to 86°C. When the reactor contents reaches 72°C, the suspension is cooled to 20°C. Particle size is 5.5 µm and width index is 1.14. Width Index is the volume size for which 84% of the particles are smaller divided by the volume size for which 16% of the particles are smaller. Smaller values of the width index represent narrower size distribution of the particles.

### Example 6 (Invention)

Same as Example 5, except the n-propyl acetate is replaced with ethyl acetate and the absolute pressure during boiling is maintained at 480 mm Hg. Particle size is 7.6 µm and width index is 2.60.

Examples 5 and 6 show that under the more rigorous stirring conditions in a 10-gallon reactor the particle size distribution is better when using n-propyl acetate.

The invention has been described in detail with particular reference to certain preferred embodiments thereof, but it will be understood that variations and modifications can be effected within the spirit and scope of the invention.

## Claims

1. A method of making polymeric particles having a predetermined and controlled size and size distribution comprising:
dissolving a polymer in a solvent;
forming a suspension of small droplets of solvent having dissolved polymer in water containing a water-insoluble particulate stabilizer having a size of less than 100 nm; and
vacuum boiling the suspension at a pressure of less than 500 mm Hg to remove the solvent from the droplets.

2. The method according to claim 1, wherein the polymer is selected from the group consisting of polyethylene, polypropylene, polyisobutylene, polyisopentylene; polytetraflouroethylene, polytrifluorochloroethylene; polyhexamethylene adipamide, polyhexamethylene sebacamide, polycaprolactam; polymethylmethacrylate, polymethylacrylate, polyethylmethacrylate, styrene-methylemethacrylate; ethylene-methyl acrylate copolymers, ethylene-ethyl acrylate copolymers, ethylene-ethyl acrylate copolymers, ethylene-ethyl methacrylate copolymers, polystyrene, cellulose acetate, cellulose acetate butyrate, cellulose propionate, cellulose acetate propionate, ethyl cellulose, polycarbonates, polyvinyl chloride, copolymers of vinyl chloride, copolymers of vinyl acetate, polyvinyl butyral, polyvinyl acetal, ethylene-vinyl acetate copolymers, ethylene-vinyl alcohol copolymers, ethylene-allyl alcohol copolymers, ethylene-allyl acetate copolymers, ethylene-allyl acetone copolymers, ethylene-allyl benzene copolymers, ethylene-allyl ether copolymers, ethylene-acrylic copolymers; polyoxymethylene, polyesters, polyurethanes, polyamides, and polycarbonates.

3. The method of claim 1, wherein the polymer has Tg less than 80°C.

4. The method according to claim 1, wherein the solvent is selected from the group consisting of chloromethane, dichloromethane, ethyl acetate, n-propyl acetate, iso-propyl acetate, vinyl chloride, methyl ethyl ketone, trichloromethane, carbon tetrachloride, ethylene chloride, trichloroethane, toluene, xylene, cyclohexanone, and 2-nitropropane.

5. The method according to claim 1, wherein the solvent comprises n-propyl acetate.

6. The method according to claim 1, wherein vacuum boiling of the suspension is at a temperature of from 35-75 °C.

7. The method according to claim 1, wherein the water containing the particulate stabilizer further comprises a promoter.

8. The method according to claim 1, wherein the water-insoluble particle stabilizer comprises silica.

9. The method according to claim 1, wherein the solidified polymer particles are toner particles.

10. A method of making electrostatic toner particles having a predetermined and controlled size and size distribution comprising:
dissolving a polymer in propyl acetate to form a propyl acetate solution;
forming a suspension of small droplets of the propyl acetate solution in water-containing a promoter and a water-insoluble particulate stabilizer having a size less than 100 nm; and
vacuum boiling the suspension at a pressure of less than 500 mm Hg and a temperature of from 35-75 °C to remove the propyl acetate from the droplets.
